# EUROPEAN PATENT APPLICATION

(11) **EP 4 597 948 A1**
(43) Date of publication of application: **06.08.2025**
(21) Application number: 22959980.8
(22) Date of filing: 28.09.2022
(51) Int. Cl.: H04L 27/00, H04W 48/16

(54) **METHOD AND APPARATUS FOR IMPLEMENTING SERVICE AREA RESTRICTION**

(71) Applicant: Beijing Xiaomi Mobile Software Co., Ltd., Beijing 100085 (CN)
(72) Inventor: MAO, Yuxin, Beijing 100085 (CN); SHEN, Yang, Beijing 100085 (CN)
(74) Representative: Stöckeler, Ferdinand
(86) International application number: PCT/CN2022/122343
(87) International publication number: WO 2024/065337

(57) **Abstract**

A method and apparatus for implementing service area restriction, a device, and a storage medium. The method comprises: in response to receiving service area restriction information sent by a network device, performing a service area restriction rule, wherein the service area restriction information comprises a TAI of an RPLMN and a TAI of at least one eRPLMN.

## Description

### TECHNICAL FIELD

The present disclosure relates to the field of communication technologies, and in particular to a method, an apparatus, and a device for implementing service area restriction, and a storage medium.

### BACKGROUND

In a communication system, a service area restriction may include an allowed area or a non-allowed area. The allowed area refers to an area in which a terminal can communicate with the network, and the non-allowed area refers to an area in which the communication of the terminal is restricted. For example, in the non-allowed area, the terminal cannot initiate a service request to a network. Since in satellite communication, the network may not be able to accurately know a current location of a user, when restricting the user's mobility (including service area restriction), it is necessary to restrict a service area according to multiple tracking area identities (TAIs) broadcasted to the user by a satellite cell. Service area restriction information provided by the network to the user includes a TAI in the user's registered public land mobile network (RPLMN), and optionally includes TAIs of one or more equivalent registered public land mobile networks (eRPLMNs). When the service area restriction is actually performed, there will be similar situations such as the user's current location area being included in both a non-allowed area of the RPLMN and an allowed area of an eRPLMN, which will cause the service area restriction to be invalid to the user.

### SUMMARY

The present disclosure proposes a method, an apparatus, and a device for implementing service area restriction, and a storage medium, which can perform a service area restriction rule according to service area restriction information sent by a network device, which solves the problem of invalid service area restriction and improves the effectiveness of service area control.

Embodiments of an aspect of the present disclosure provide a method for implementing service area restriction. The method is performed by a terminal, and includes:
in response to receiving service area restriction information sent by a network device, performing a service area restriction rule;
in which the service area restriction information includes tracking area identities (TAIs) of a registered public land mobile network (RPLMN) and TAIs of at least one equivalent registered public land mobile network (eRPLMN).

Embodiments of another aspect of the present disclosure provide a method for implementing service area restriction. The method is performed by a network device, and includes:
sending service area restriction information to a terminal; and
in response to receiving a signaling sent by the terminal, performing a service area restriction rule on the terminal according to the service area restriction information;
in which the service area restriction information includes TAIs of an RPLMN and TAIs of at least one eRPLMN.

Embodiments of another aspect of the present disclosure provide an apparatus for implementing service area restriction. The apparatus is arranged on a terminal, and includes:
a performing module, configured to perform a service area restriction rule in response to receiving service area restriction information sent by a network device;
in which the service area restriction information includes TAIs of an RPLMN and TAIs of at least one eRPLMN.

Embodiments of another aspect of the present disclosure provide an apparatus for implementing service area restriction. The apparatus is arranged on a network, and includes:
a sending module, configured to send service area restriction information to a terminal; and
a performing module, configured to perform a service area restriction rule on the terminal according to the service area restriction information, in response to receiving a signaling sent by the terminal;
in which the service area restriction information includes TAIs of an RPLMN and TAIs of at least one eRPLMN.

Embodiments of another aspect of the present disclosure provide a terminal, which includes a processor and a memory. The memory stores a computer program, and the processor executes the computer program stored in the memory to cause the apparatus to perform the method provided in the embodiments of the above aspect.

Embodiments of another aspect of the present disclosure provide a network device, which includes a processor and a memory. The memory stores a computer program, and the processor executes the computer program stored in the memory to cause the apparatus to perform the method provided in the embodiments of the above aspect.

Embodiments of another aspect of the present disclosure provide a communication apparatus, which includes a processor and an interface circuit;
the interface circuit is configured to receive code instructions and transmit them to the processor;
the processor is configured to run the code instructions to perform the method provided in the embodiments of the above aspect.

Embodiments of another aspect of the present disclosure provide a computer-readable storage medium, which is configured to store instructions. When the instructions are executed, the method provided in the embodiments of the above aspect is implemented.

Embodiments of another aspect of the present disclosure provide a system for implementing service area restriction. The system includes:
a terminal, configured to perform the method provided in the embodiments of the above aspect;
a network device, configured to perform the method provided in the embodiments of another aspect above.

In summary, in the embodiments of the present disclosure, in response to receiving the service area restriction information sent by the network device, the service area restriction rule is performed; in which the service area restriction information includes the TAIs of the RPLMN and the TAIs of the at least one eRPLMN. In the embodiments of the present disclosure, an implementation mechanism of the service area restriction can be provided, and the service area restriction rule can be performed to improve the accuracy of the service area restriction. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

### BRIEF DESCRIPTION OF THE DRAWINGS

The above and/or additional aspects and advantages of the present disclosure will become apparent and easily understood from the following description of the embodiments in combination with the accompanying drawings.
FIG. 1 is a schematic flow chart of a method for implementing service area restriction provided by an embodiment of the present disclosure.
FIG. 2 is a schematic diagram of an interaction of a method for implementing service area restriction provided by an embodiment of the present disclosure.
FIG. 3 is a schematic flow chart of a method for implementing service area restriction provided by another embodiment of the present disclosure.
FIG. 4 is a schematic flow chart of a method for implementing service area restriction provided by another embodiment of the present disclosure.
FIG. 5 is a schematic flow chart of a method for implementing service area restriction provided by another embodiment of the present disclosure.
FIG. 6 is a schematic flow chart of a method for implementing service area restriction provided by another embodiment of the present disclosure.
FIG. 7 is a schematic flow chart of a method for implementing service area restriction provided by another embodiment of the present disclosure.
FIG. 8 is a schematic flow chart of a method for implementing service area restriction provided by another embodiment of the present disclosure.
FIG. 9 is a schematic flow chart of a method for implementing service area restriction provided by another embodiment of the present disclosure.
FIG. 10 is a schematic flow chart of a method for implementing service area restriction provided by another embodiment of the present disclosure.
FIG. 11 is a schematic flow chart of a method for implementing service area restriction provided by another embodiment of the present disclosure.
FIG. 12 is a schematic flow chart of a method for implementing service area restriction provided by another embodiment of the present disclosure.
FIG. 13 is a schematic flow chart of a method for implementing service area restriction provided by another embodiment of the present disclosure.
FIG. 14 is a schematic flow chart of a method for implementing service area restriction provided by another embodiment of the present disclosure.
FIG. 15 is a schematic flow chart of a method for implementing service area restriction provided by another embodiment of the present disclosure.
FIG. 16 is a schematic structural diagram of an apparatus for implementing service area restriction provided by an embodiment of the present disclosure.
FIG. 17 is a schematic structural diagram of an apparatus for implementing service area restriction provided by another embodiment of the present disclosure.
FIG. 18 is a schematic structural diagram of a system for implementing service area restriction provided by an embodiment of the present disclosure.
FIG. 19 is a block diagram of a terminal provided by an embodiment of the present disclosure.
FIG. 20 is a block diagram of a network device provided by an embodiment of the present disclosure.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" as used in the description may be interpreted as "when" or "in a case that" or "in response to determining that".

A network element or network function involved in the embodiments of the present disclosure may be implemented by an independent hardware device or by software in the hardware device, which is not limited in the embodiments of the present disclosure.

In a communication system, service area restriction may include an allowed area or a non-allowed area. The allowed area refers to an area in which the terminal can communicate with a network, and the non-allowed area refers to an area in which communication of the terminal is restricted. For example, in the non-allowed area, the terminal cannot initiate a service request to the network, and cannot initiate any connection request related to a user plane or a control plane to the network.

In an embodiment of the present disclosure, both the allowed area and the non-allowed area may be specified using a tracking area identifier (TAI). For example, the service area restriction may include one or more tracking areas (TAs), in which the number of TAs may be, for example, up to 16, or may be set to unlimited (i.e., including all TAs of a public land mobile network (PLMN)).

In an embodiment of the present disclosure, an access and mobility management function (AMF) assigns the service area restriction to the terminal according to contract information of the terminal, and may also be updated as needed. It can be provided to the terminal through a registration procedure or a user configuration update (UCU) procedure. When the AMF provides service area restriction information to the terminal, only the allowed area or the non-allowed area is included, but not both of them at the same time.

If the terminal uses satellite access, and a next generation Node B (gNB) broadcasts multiple TAIs, the network performs service area restriction as follows:
the AMF receives a broadcast TAI (if a single TAI is broadcast) or all broadcast TAIs (if multiple TAIs are broadcast) from an NG-radio access network (RAN). The AMF provides the service area restriction including the allowed area or the non-allowed area for the terminal. The service area restriction procedure is performed as follows:
if none of the broadcast TAIs is included in the allowed area, the terminal and the AMF consider that the terminal is in the non-allowed area;
if at least one broadcast TAI is included in the allowed area, the terminal and the AMF consider that the terminal is in the allowed area.

If the satellite cell is a shared network cell (for example, a PLMN-A and a PLMN-B share the same satellite cell), the following situations may occur:
when the terminal successfully accesses a PLMN, it is assigned a registration area (RA), which, in addition to a registered PLMN (RPLMN), may also include at least one equivalent registered PLMN (eRPLMN). That is, the RA contains a TAI list, which includes TAIs from the RPLMN and the eRPLMN(s);
the terminal is assigned an allowed area;
the network broadcasts the multiple TAIs to the UE through the satellite cell:
   1. these TAIs belong to RPLMNs and different eRPLMNs, and
   2. all tracking area codes (TACs) corresponding to the broadcast TAIs of the RPLMN are not in the allowed area;
   3. at least one TAC corresponding to the broadcast TAI of the eRPLMN is included in the allowed area.

According to 2, the terminal is not permitted to communicate with the network at the current location, but according to 3, the terminal can communicate with the network at the current location. This situation will make the service area restriction invalid to the terminal.

A method, an apparatus, a device for implementing service area restriction, and a storage medium provided by embodiments of the present disclosure will be described in detail below with reference to the accompanying drawings.

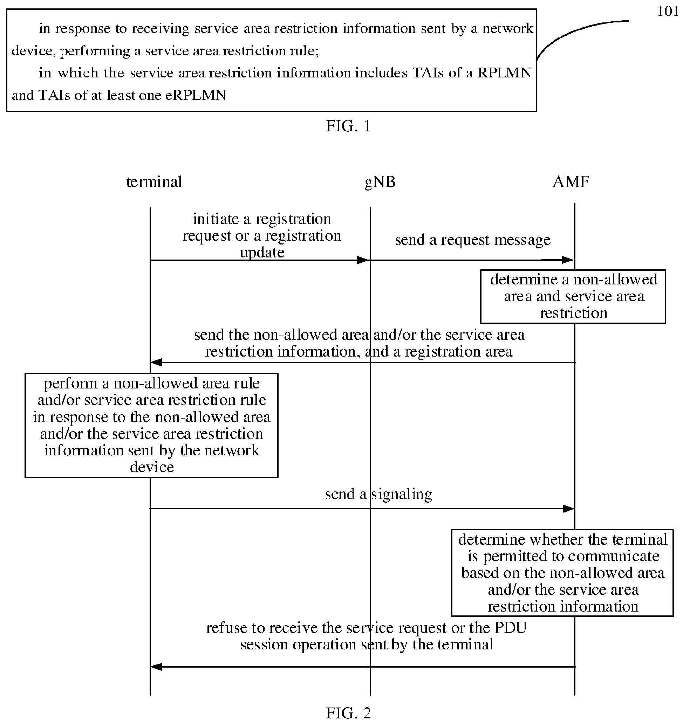

FIG. 1 is a schematic flow chart of a method for implementing service area restriction provided by an embodiment of the present disclosure. The method is performed by a terminal. As shown in FIG. 1, the method may include the following step:
step 101, in response to receiving service area restriction information sent by a network device, performing a service area restriction rule;
in which the service area restriction information includes tracking area identities (TAIs) of a registered public land mobile network (RPLMN) and TAIs of at least one equivalent registered public land mobile network (eRPLMN).

It should be noted that, in an embodiment of the present disclosure, the terminal may be a device that provides voice and/or data connectivity to a user. The terminal may communicate with one or more core networks via a radio access network (RAN). The terminal may be an IoT terminal, such as a sensor device, a mobile phone (or a "cellular" phone), and a computer with an IoT terminal, for example, a fixed, portable, pocket-sized, handheld, computer-built-in, or vehicle-mounted device. For example, a subscriber station (STA), a subscriber unit, a subscriber station, a mobile station, a mobile, a remote station, an access point, a remote terminal, an access terminal, a user terminal, or a user agent; or the terminal may also be a device of an unmanned aerial vehicle; or the terminal may also be a vehicle-mounted device, for example, an onboard computer with a wireless communication function, or a wireless terminal connected to an external onboard computer; or the terminal may also be a roadside device, for example, a street lamp, a traffic light or other roadside device with a wireless communication function.

In an embodiment of the present disclosure, FIG. 2 is a schematic diagram of an interaction of a method for implementing service area restriction provided by an embodiment of the present disclosure. As shown in FIG. 2, when a terminal initiates a registration request or a registration update, a gNB may send a request message to a network device. The network device may be, for example, an AMF. The request message includes a broadcast TAI. When the AMF registration is successful, the AMF sends service area restriction information to the terminal, as well as a registration area to the terminal. The terminal performs the service area restriction rule before initiating network communication. The terminal sends a signaling to the network. The signaling may be a service request or a packet data unit (PDU) session operation. When the terminal sends a service request or a PDU session operation to the AMF, the AMF may determine whether the terminal is permitted to communicate based on the service area restriction information. If the AMF determines that the terminal is not permitted to communicate, the AMF refuses to receive the service request or the PDU session operation sent by the terminal.

In an embodiment of the present disclosure, the service area restriction information may only include the non-allowed area alone, or may only include the allowed area alone.

In an embodiment of the present disclosure, since the TAI is determined based on a TAC and a PLMN identity, the terminal may determine, based on the TAI, which PLMN each TAI belongs to.

In an embodiment of the present disclosure, the service area restriction information includes a non-allowed area, and performing the service area restriction rule includes:
in response to the broadcast TAIs of the RPLMN being all included in the non-allowed area, determining that the terminal is in the non-allowed area; and
determining that the terminal accesses any of the at least one eRPLMN using a non-allowed area restriction.

For example, in an embodiment of the present disclosure, the non-allowed area restriction means that the terminal cannot communicate with the corresponding network. For example, when it is determined that the terminal accesses any of the at least one eRPLMN using the non-allowed area restriction, the terminal cannot communicate with the eRPLMN.

In an embodiment of the present disclosure, the service area restriction information includes an allowed area, and performing the service area restriction rule includes:
in response to none of the broadcast TAIs of the RPLMN being included in the allowed area, determining that the terminal is in a non-allowed area; and
determining that the terminal accesses any of the at least one eRPLMN using a non-allowed area restriction.

In an embodiment of the present disclosure, determining that the terminal accesses any of the at least one eRPLMN using the non-allowed area restriction includes:
in a case that the terminal is in the non-allowed area when the terminal uses the RPLMN, determining that the terminal is still in the non-allowed area when the terminal uses any of the at least one eRPLMN.

In an embodiment of the present disclosure, the service area restriction information includes a non-allowed area, and performing the service area restriction rule includes:
in response to at least one of the broadcast TAIs of the RPLMN not being included in the non-allowed area, determining that the terminal is in an allowed area; and
determining whether the terminal is in the allowed area according to a predefined rule in response to using any of the at least one eRPLMN.

In an embodiment of the present disclosure, the service area restriction information includes an allowed area, and performing the service area restriction rule includes:
in response to at least one of the broadcast TAIs of the RPLMN being included in the allowed area, determining that the terminal is in the allowed area; and
determining whether the terminal is in the allowed area according to a predefined rule in response to using any of the at least one eRPLMN.

For example, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Further, in an embodiment of the present disclosure, in a case that the terminal uses any of the at least one eRPLMN, in response to the broadcast TAIs of the eRPLMN being all included in the non-allowed area, it is determined that the terminal is in the non-allowed area when the terminal uses the eRPLMN.

Further, in an embodiment of the present disclosure, in a case that the terminal uses any of the at least one eRPLMN, in response to none of the broadcast TAIs of the eRPLMN being included in the allowed area, it is determined that the terminal is in the non-allowed area when the terminal uses the eRPLMN.

Further, in an embodiment of the present disclosure, in a case that the terminal uses any of the at least one eRPLMN, in response to at least one of the broadcast TAIs of the eRPLMN being not included in the non-allowed area, it is determined that the terminal is in the allowed area when the terminal uses the eRPLMN.

Further, in an embodiment of the present disclosure, in a case that the terminal uses any of the at least one eRPLMN, in response to at least one of the broadcast TAIs of the eRPLMN being included in the allowed area, it is determined that the terminal is in the allowed area when the terminal uses the eRPLMN.

For example, in an embodiment of the present disclosure, the predefined rule includes:
in response to using any of the at least one eRPLMN, in a case that the terminal is in the allowed area when the terminal uses the RPLMN, determining that the terminal is still in the allowed area when the terminal uses any of the at least one eRPLMN.

In summary, in the embodiments of the present disclosure, in response to receiving the service area restriction information sent by the network device, the service area restriction rule is performed; in which the service area restriction information includes the TAIs of the RPLMN and the TAIs of the at least one eRPLMN. In the embodiments of the present disclosure, an implementation mechanism of the service area restriction can be provided, and the service area restriction rule can be performed to improve the accuracy of the service area restriction. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

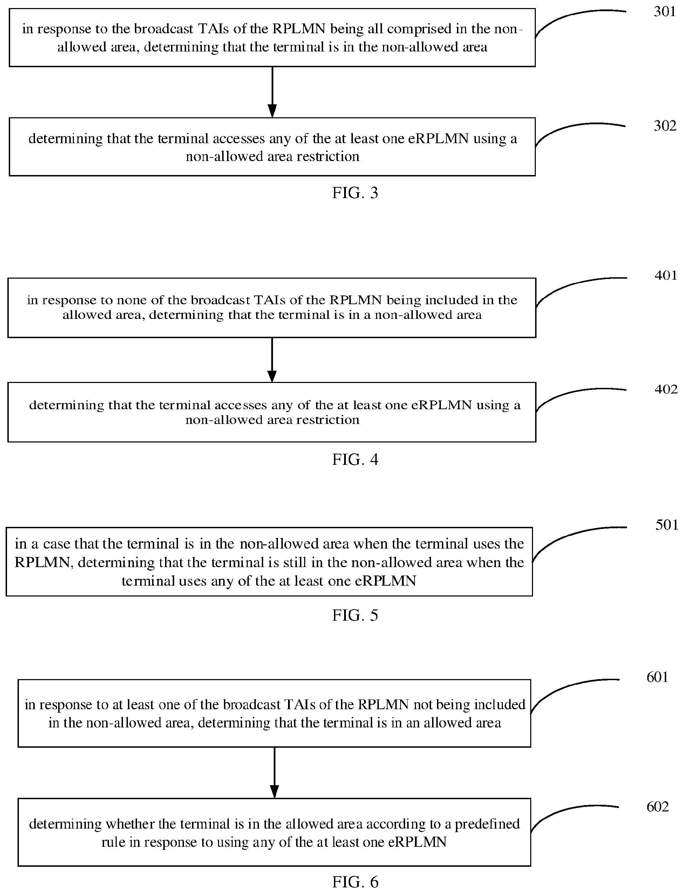

FIG. 3 is a schematic flow chart of a method for implementing service area restriction provided by an embodiment of the present disclosure. The method is performed by a terminal. As shown in FIG. 3, the method may include the following steps:
step 301, in response to the broadcast TAIs of the RPLMN being all included in the non-allowed area, determining that the terminal is in the non-allowed area; and
step 302, determining that the terminal accesses any of the at least one eRPLMN using a non-allowed area restriction.

In an embodiment of the present disclosure, the terminal may receive the service area restriction information sent by the network, and the terminal may, for example, perform the service area restriction rule.

For example, in an embodiment of the present disclosure, the terminal may receive the service area restriction information sent by the network device, and the service area information includes, for example, the non-allowed area, that is, the service area information only includes the non-allowed area, and does not include the allowed area. When the terminal performs the service area restriction rule, in response to the broadcast TAIs of the RPLMN being all included in the non-allowed area, it is determined that the terminal is in the non-allowed area, and it is determined that the terminal accesses any of the at least one eRPLMN using the non-allowed area restriction.

In an embodiment of the present disclosure, since the TAI is determined based on the TAC and the PLMN identifier, the terminal may determine, based on the TAI, which PLMN each TAI belongs to.

In summary, in the embodiments of the present disclosure, in response to the broadcast TAIs of the RPLMN being all included in the non-allowed area, it is determined that the terminal is in the non-allowed area; and it is determined that the terminal accesses any of the at least one eRPLMN using the non-allowed area restriction. In the embodiments of the present disclosure, an implementation mechanism for service area restriction can be provided, and the service area restriction rule can be performed to improve the accuracy of the service area restriction. The embodiments of the present disclosure specifically disclose a scheme for the terminal to perform the service area restriction rule. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

FIG4 is a schematic flow chart of a method for implementing service area restriction provided by an embodiment of the present disclosure. The method is performed by a terminal. As shown in FIG4 , the method may include the following steps:
step 401, in response to none of the broadcast TAIs of the RPLMN being included in the allowed area, determining that the terminal is in a non-allowed area; and
step 402, determining that the terminal accesses any of the at least one eRPLMN using a non-allowed area restriction.

In an embodiment of the present disclosure, the terminal may receive the service area restriction information sent by the network, and the terminal may, for example, perform the service area restriction rule.

For example, in an embodiment of the present disclosure, the terminal may receive the service area restriction information sent by the network device, and the service area information includes, for example, the allowed area, that is, the service area information only includes the allowed area, and does not include the non-allowed area. When the terminal performs the service area restriction rule, in response to none of the broadcast TAIs of the RPLMN being included in the allowed area, it is determined that the terminal is in the non-allowed area, and it is determined that the terminal accesses any of the at least one eRPLMN using the non-allowed area restriction.

In an embodiment of the present disclosure, since the TAI is determined based on the TAC and the PLMN identifier, the terminal may determine, based on the TAI, which PLMN each TAI belongs to.

In summary, in the embodiments of the present disclosure, in response to none of the broadcast TAIs of the RPLMN being included in the allowed area, it is determined that the terminal is in the non-allowed area, and it is determined that the terminal accesses any of the at least one eRPLMN using the non-allowed area restriction. In the embodiments of the present disclosure, an implementation mechanism for the service area restriction can be provided, and service area restriction rules can be executed to improve the accuracy of service area restrictions. The embodiments of the present disclosure specifically disclose a scheme for the terminal to perform the service area restriction rule. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

FIG. 5 is a schematic flow chart of a method for implementing service area restriction provided by an embodiment of the present disclosure. The method is performed by a terminal. As shown in FIG. 5 , the method may include the following step:
step 501, in a case that the terminal is in the non-allowed area when the terminal uses the RPLMN, determining that the terminal is still in the non-allowed area when the terminal uses any of the at least one eRPLMN.

In an embodiment of the present disclosure, when the terminal is in the non-allowed area when the terminal uses the RPLMN, it is determined that the terminal is still in the non-allowed area when the terminal uses any eRPLMN. That is, if the terminal is in the non-allowed area when terminal uses RPLMN, no matter which eRPLMN the terminal uses, the terminal determines that the terminal is still in the non-allowed area. That is, regardless of whether any broadcast TAI of at least one eRPLMN is included in the allowed area, the terminal is still in the non-allowed area.

In summary, in the embodiments of the present disclosure, in a case that the terminal is in the non-allowed area when terminal uses the RPLMN, it is determined that when the terminal uses any of the at least one eRPLMN, the terminal is still in the non-allowed area. In the embodiments of the present disclosure, an implementation mechanism of the service area restriction can be provided, and the service area restriction rule can be performed to improve the accuracy of the service area restriction. The embodiments of the present disclosure specifically disclose a scheme for the terminal to perform the service area restriction rule. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

FIG. 6 is a schematic flow chart of a method for implementing service area restriction provided in an embodiment of the present disclosure. The method is performed by a terminal. As shown in FIG. 6 , the method may include the following steps:
step 601, in response to at least one of the broadcast TAIs of the RPLMN not being included in the non-allowed area, determining that the terminal is in an allowed area; and
step 602, determining whether the terminal is in the allowed area according to a predefined rule in response to using any of the at least one eRPLMN.

In an embodiment of the present disclosure, the terminal may receive the service area restriction information sent by the network, and the terminal may, for example, perform the service area restriction rule.

For example, in an embodiment of the present disclosure, the terminal may receive the service area restriction information sent by the network device, and the service area information includes, for example, the non-allowed area. That is, the service area information only includes the non-allowed area and does not include the allowed area. When the terminal performs the service area restriction rule, in response to at least one of the broadcast TAIs of the RPLMN not being included in the non-allowed area, it is determined that the terminal is in the allowed area; and in response to using any of the at least one eRPLMN, whether the terminal is in the allowed area is determined according to the predefined rule.

In an embodiment of the present disclosure, in a case that the terminal is in the allowed area, when the terminal uses any of the at least one eRPLMN, the terminal may determine whether the terminal is in the allowed area according to the predefined rule.

For example, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Further, in an embodiment of the present disclosure, in a case that the terminal uses any eRPLMN, in response to the broadcast TAIs of the eRPLMN being all included in the non-allowed area, it is determined that the terminal is in the non-allowed area when the terminal uses the eRPLMN.

Further, in an embodiment of the present disclosure, in a case that the terminal uses any eRPLMN, in response to none of the broadcast TAIs of the eRPLMN being included in the allowed area, it is determined that the terminal is in the non-allowed area when the terminal uses the eRPLMN.

Further, in an embodiment of the present disclosure, in a case that the terminal uses any eRPLMN, in response to at least one of the broadcast TAIs of the eRPLMN being not included in the non-allowed area, it is determined that the terminal is in the allowed area when the terminal uses the eRPLMN.

Further, in an embodiment of the present disclosure, in a case that the terminal uses any eRPLMN, in response to at least one of the broadcast TAIs of the eRPLMN being included in the allowed area, it is determined that the terminal is in the allowed area when the terminal uses the eRPLMN.

For example, in an embodiment of the present disclosure, the predefined rule includes:
in response to using any eRPLMN, in a case that the terminal is in the allowed area when the terminal uses the RPLMN, determining that the terminal is still in the allowed area when the terminal uses any eRPLMN.

Furthermore, in an embodiment of the present disclosure, since the TAI is determined based on the TAC and the PLMN identifier, the terminal may determine, based on the TAI, which PLMN each TAI belongs to.

In summary, in the embodiments of the present disclosure, in response to at least one of the broadcast TAIs of the RPLMN not being included in the non-allowed area, it is determined that the terminal is in the allowed area; in response to using any eRPLMN, whether the terminal is in the allowed area is determined according to the predefined rule. In the embodiments of the present disclosure, an implementation mechanism of the service area restriction can be provided, and the service area restriction rule can be performed to improve the accuracy of the service area restriction. The embodiments of the present disclosure specifically disclose a scheme for the terminal to perform the service area restriction rule. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

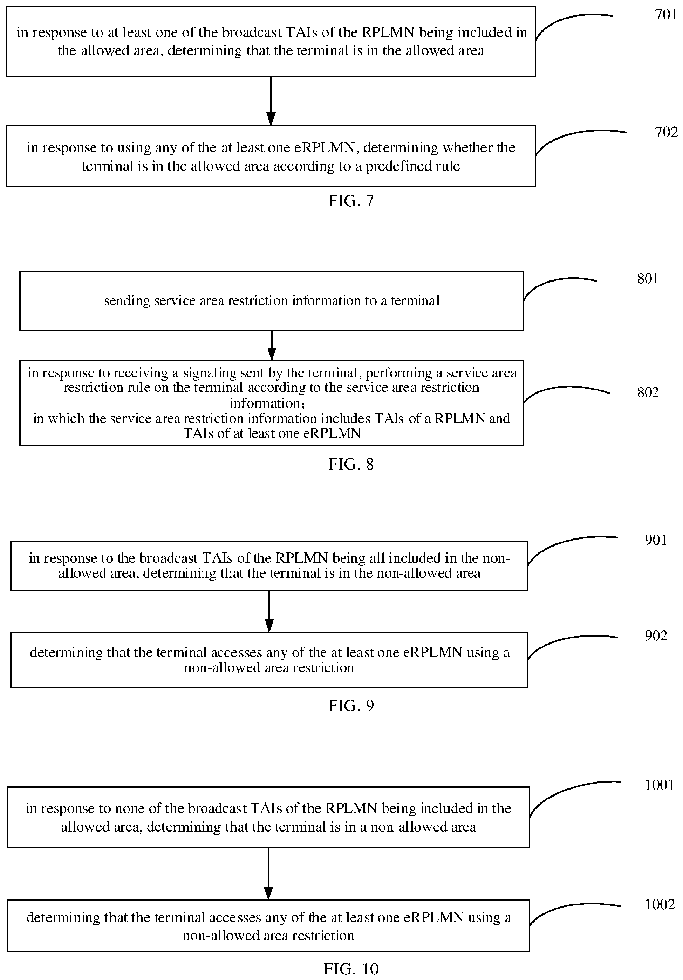

FIG. 7 is a schematic flow chart of a method for implementing service area restriction provided by an embodiment of the present disclosure. The method is performed by a terminal. As shown in FIG. 7 , the method may include the following steps:
step 701, in response to at least one of the broadcast TAIs of the RPLMN being included in the allowed area, determining that the terminal is in the allowed area; and
step 702, in response to using any of the at least one eRPLMN, determining whether the terminal is in the allowed area according to a predefined rule.

In an embodiment of the present disclosure, the terminal may receive the service area restriction information sent by the network, and the terminal may perform the service area restriction rule.

For example, in an embodiment of the present disclosure, the terminal may receive the service area restriction information sent by the network device, and the service area information includes, for example, the allowed area. That is, the service area information only includes the allowed area and does not include the non-allowed area. When the terminal performs the service area restriction rule, in response to at least one of the broadcast TAIs of the RPLMN being included in the allowed area, it is determined that the terminal is in the allowed area; and in response to using any eRPLMN, whether the terminal is in the allowed area is determined according to the predefined rule.

For example, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Further, in an embodiment of the present disclosure, in a case that the terminal uses any eRPLMN, in response to the broadcast TAIs of the eRPLMN being all included in the non-allowed area, it is determined that the terminal is in the non-allowed area when the terminal uses the eRPLMN.

Further, in an embodiment of the present disclosure, in a case that the terminal uses any eRPLMN, in response to none of the broadcast TAIs of the eRPLMN being included in the allowed area, it is determined that the terminal is in the non-allowed area when the terminal uses the eRPLMN.

Further, in an embodiment of the present disclosure, in a case that the terminal uses any eRPLMN, in response to at least one of the broadcast TAIs of the eRPLMN being not included in the non-allowed area, it is determined that the terminal is in the allowed area when the terminal uses the eRPLMN.

Further, in an embodiment of the present disclosure, in a case that the terminal uses any eRPLMN, in response to at least one of the broadcast TAIs of the eRPLMN being included in the allowed area, it is determined that the terminal is in the allowed area when the terminal uses the eRPLMN.

For example, in an embodiment of the present disclosure, the predefined rule includes:
in response to using any eRPLMN, in a case that the terminal is in the allowed area when the terminal uses the RPLMN, determining that the terminal is still in the allowed area when the terminal uses any eRPLMN.

Furthermore, in an embodiment of the present disclosure, since the TAI is determined based on the TAC and the PLMN identifier, the terminal may determine, based on the TAI, which PLMN each TAI belongs to.

In summary, in the embodiments of the present disclosure, in response to at least one of the broadcast TAIs of the RPLMN being included in the allowed area, it is determined that the terminal is in the allowed area; in response to using any eRPLMN, whether the terminal is in the allowed area is determined according to the predefined rule. In the embodiments of the present disclosure, an implementation mechanism of the service area restriction can be provided, and the service area restriction rule can be performed to improve the accuracy of the service area restriction. The embodiments of the present disclosure specifically disclose a scheme for the terminal to perform the service area restriction rule. The present disclosure provides a processing method for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

FIG. 8 is a schematic flow chart of a method for implementing service area restriction provided by an embodiment of the present disclosure. The method is performed by a network device. As shown in FIG. 8 , the method may include the following steps:
step 801, sending service area restriction information to a terminal; and
step 802, in response to receiving a signaling sent by the terminal, performing a service area restriction rule on the terminal according to the service area restriction information;
in which the service area restriction information includes TAIs of an RPLMN and TAIs of at least one eRPLMN.

In an embodiment of the present disclosure, the service area restriction information includes a non-allowed area, and performing the service area restriction rule on the terminal includes:
in response to the broadcast TAIs of the RPLMN being all included in the non-allowed area, determining that the terminal is in the non-allowed area; and
determining that the terminal accesses any of the at least one eRPLMN using a non-allowed area restriction.

For example, in an embodiment of the present disclosure, performing the non-allowed area restriction rule on the terminal means that the terminal cannot communicate with the corresponding network. For example, when performing the non-allowed area restriction rule on the terminal in response to the terminal accessing any of the at least one eRPLMN, it may be determined that the terminal cannot communicate with any eRPLMN.

In an embodiment of the present disclosure, the service area restriction information includes an allowed area, and performing the service area restriction rule on the terminal includes:
in response to none of the broadcast TAIs of the RPLMN being included in the allowed area, determining that the terminal is in a non-allowed area; and
determining that the terminal accesses any of the at least one eRPLMN using a non-allowed area restriction.

In an embodiment of the present disclosure, determining that the terminal accesses any of the at least one eRPLMN using the non-allowed area restriction includes:
in a case that the terminal is in the non-allowed area when the terminal uses the RPLMN, determining that the terminal is still in the non-allowed area when the terminal uses any of the at least one eRPLMN.

In an embodiment of the present disclosure, the service area restriction information includes a non-allowed area, and performing the service area restriction rule on the terminal includes:
in response to at least one of the broadcast TAIs of the RPLMN not being included in the non-allowed area, determining that the terminal is in an allowed area; and
determining whether the terminal is in the allowed area according to a predefined rule in response to using any of the at least one eRPLMN.

In an embodiment of the present disclosure, the service area restriction information includes an allowed area, and performing the service area restriction rule on the terminal includes:
in response to at least one of the broadcast TAIs of the RPLMN being included in the allowed area, determining that the terminal is in the allowed area; and
determining whether the terminal is in the allowed area according to a predefined rule in response to using any of the at least one eRPLMN.

Furthermore, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

In an embodiment of the present disclosure, the predefined rule includes:
in response to using any of the at least one eRPLMN, in a case that the terminal is in the allowed area when the terminal uses the RPLMN, determining that the terminal is still in the allowed area when the terminal uses any of the at least one eRPLMN.

In an embodiment of the present disclosure, performing the service area restriction rule on the terminal includes:
obtaining current location information of the terminal; and
determining whether the current location information is included in the service area restriction information.

Furthermore, in an embodiment of the present disclosure, the method includes:
in response to determining whether the current location information is included in the service area restriction information, performing at least one of:
in response to the current location information being included in a non-allowed area of the RPLMN, determining that the terminal accesses the RPLMN or any of the at least one eRPLMN using a non-allowed area restriction;
in response to the current location information being included in an allowed area of the RPLMN, determining that the terminal accesses the RPLMN or any of the at least one eRPLMN using an allowed area restriction; or
in response to the current location information being included in the allowed area of the RPLMN and in the non-allowed area of any of the at least one eRPLMN, determining that a corresponding allowed area restriction is used when the terminal accesses the RPLMN, and a corresponding non-allowed area restriction is used when the terminal accesses the eRPLMN.

In summary, in the embodiments of the present disclosure, the service area restriction information is sent to the terminal; in response to receiving the signaling sent by the terminal, the service area restriction rule is performed on the terminal according to the service area restriction information; in which the service area restriction information includes the TAIs of the RPLMN and the TAIs of at least one eRPLMN. In the embodiments of the present disclosure, an implementation mechanism for the service area restriction can be provided, and the service area restriction rule can be performed to improve the accuracy of the service area restriction. The present disclosure provides a processing method for a situation of implementing the service area restriction to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 9 is a schematic flow chart of a method for implementing service area restriction provided in an embodiment of the present disclosure. The method is performed by a network device. As shown in FIG. 9, the method may include the following steps:
step 901, in response to the broadcast TAIs of the RPLMN being all included in the non-allowed area, determining that the terminal is in the non-allowed area; and
step 902, determining that the terminal accesses any of the at least one eRPLMN using a non-allowed area restriction.

In an embodiment of the present disclosure, in response to the signaling sent by the terminal, according to the service area restriction information, the network device can, for example, perform the service area restriction rule on the terminal. That is, when the network device receives the signaling sent by the terminal, the network device can, for example, perform the service area restriction rule according to the service area restriction information.

Furthermore, in an embodiment of the present disclosure, the network device may also send the service area restriction information to the terminal.

For example, in an embodiment of the present disclosure, the service area information includes, for example, the non-allowed area. That is, the service area information only includes the non-allowed area, but does not include the allowed area. When the network device performs the service area restriction rule, in response to the broadcast TAIs of the RPLMN being all included in the non-allowed area, it is determined that the terminal is in the non-allowed area, and it is determined that the terminal accesses any of the at least one eRPLMN using the non-allowed area restriction. That is, in response to the terminal accessing any eRPLMN, the non-allowed area restriction rule is performed on the terminal.

Furthermore, in an embodiment of the present disclosure, since the TAI is determined based on the TAC and the PLMN identifier, which PLMN each TAI belongs to may be determined based on the TAI.

In summary, in the embodiments of the present disclosure, in response to the broadcast TAIs of the RPLMN being all included in the non-allowed area, it is determined that the terminal is in the non-allowed area; it is determined that the terminal accesses any of the at least one eRPLMN using the non-allowed area restriction. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to perform the service area restriction rule. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 10 is a schematic flow chart of a method for implementing service area restriction provided in an embodiment of the present disclosure. The method is performed by a network device. As shown in FIG. 10 , the method may include the following steps:
step 1001, in response to none of the broadcast TAIs of the RPLMN being included in the allowed area, determining that the terminal is in a non-allowed area; and
step 1002, determining that the terminal accesses any of the at least one eRPLMN using a non-allowed area restriction.

In an embodiment of the present disclosure, in response to the signaling sent by the terminal, the network device may, for example, perform the service area restriction rule according to the service area restriction information. That is, when the network device receives the signaling sent by the terminal, the network device may, for example, perform the service area restriction rule according to the service area restriction information.

In an embodiment of the present disclosure, the network device may also send service area restriction information to the terminal.

For example, in an embodiment of the present disclosure, the service area information includes, for example, the non-allowed area. That is, the service area information only includes the non-allowed area, but does not include the allowed area. When the network device performs the service area restriction rule, in response to none of the broadcast TAIs of the RPLMN being included in the allowed area, it is determined that the terminal is in the non-allowed area; and it is determined that the terminal accesses any of the at least one eRPLMN using the non-allowed area restriction, in which determining that the terminal accesses any of the at least one eRPLMN using the non-allowed area restriction may include, for example, in response to the terminal accessing any eRPLMN, performing the non-allowed area restriction rule on the terminal.

In an embodiment of the present disclosure, since the TAI is determined based on the TAC and the PLMN identifier, which PLMN each TAI belongs to may be determined based on the TAI.

In summary, in the embodiments of the present disclosure, in response to none of the broadcast TAIs of the RPLMN being included in the allowed area, it is determined that the terminal is in the non-allowed area; and it is determined that the terminal accesses any of the at least one eRPLMN using the non-allowed area restriction. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to perform the service area restriction rule. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

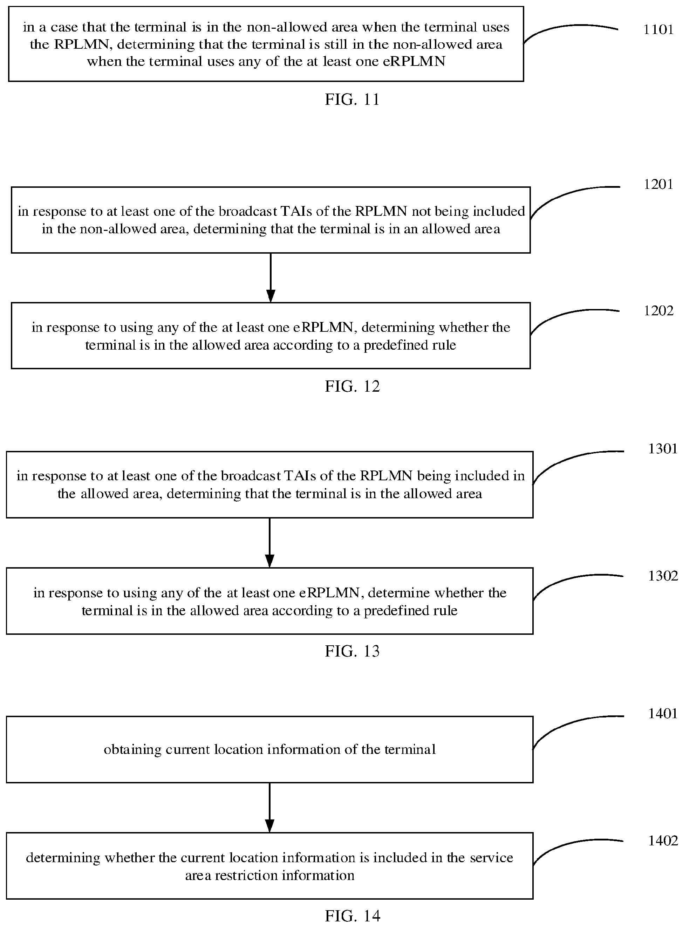

FIG. 11 is a schematic flow chart of a method for implementing service area restriction provided in an embodiment of the present disclosure. The method is performed by a network device. As shown in FIG. 11, the method may include the following step:
step 1101, in a case that the terminal is in the non-allowed area when the terminal uses the RPLMN, determining that the terminal is still in the non-allowed area when the terminal uses any of the at least one eRPLMN.

In an embodiment of the present disclosure, when the terminal is in the non-allowed area when the terminal uses the RPLMN, the network device may determine that the terminal is still in the non-allowed area when using any of the at least one eRPLMN. That is, if the terminal is in the non-allowed area when the terminal uses RPLMN, no matter which eRPLMN the terminal uses, the network device may determine that the terminal is still in the non-allowed area. That is, regardless of whether any broadcast TAI of the at least one eRPLMN is included in the allowed area, the network device may determine that the terminal is still in the non-allowed area.

In summary, in the embodiments of the present disclosure, in a case that the terminal is in the non-allowed area when the terminal uses RPLMN, when the terminal uses any of the at least one eRPLMN, it is determined that the terminal is still in the non-allowed area. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to perform the service area restriction rule. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 12 is a schematic flow chart of a method for implementing service area restriction provided in an embodiment of the present disclosure. The method is performed by a network device. As shown in FIG. 12, the method may include the following steps:
step 1201, in response to at least one of the broadcast TAIs of the RPLMN not being included in the non-allowed area, determining that the terminal is in an allowed area; and
step 1202, in response to using any of the at least one eRPLMN, determining whether the terminal is in the allowed area according to a predefined rule.

In an embodiment of the present disclosure, in response to the signaling sent by the terminal, according to the service area restriction information, the network device may, for example, perform the service area restriction rule on the terminal. That is, when the network device receives the signaling sent by the terminal, the network device may, for example, perform the service area restriction rule according to the service area restriction information.

For example, in an embodiment of the present disclosure, the service area information includes, for example, the non-allowed area. That is, the service area information only includes the non-allowed area, but does not include the allowed area. When the network device performs the service area restriction rule, in response to at least one of the broadcast TAIs of the RPLMN not being included in the non-allowed area, the network device may determine that the terminal is in the allowed area; and in response to using any of the at least one eRPLMN, the network device determines whether the terminal is in the allowed area according to a predefined rule.

Further, in an embodiment of the present disclosure, in a case that the terminal is in the allowed area, when the terminal uses any of the at least one eRPLMN, the network device may determine whether the terminal is in the allowed area according to the predefined rule.

For example, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Further, in an embodiment of the present disclosure, in a case that the terminal uses any eRPLMN, in response to the broadcast TAIs of the eRPLMN being all included in the non-allowed area, it is determined that the terminal is in the non-allowed area when the terminal uses the eRPLMN.

Further, in an embodiment of the present disclosure, in a case that the terminal uses any eRPLMN, in response to none of the broadcast TAIs of the eRPLMN being included in the allowed area, it is determined that the terminal is in the non-allowed area when the terminal uses the eRPLMN.

Further, in an embodiment of the present disclosure, in a case that the terminal uses any eRPLMN, in response to at least one of the broadcast TAIs of the eRPLMN being not included in the non-allowed area, it is determined that the terminal is in the allowed area when the terminal uses the eRPLMN.

Further, in an embodiment of the present disclosure, in a case that the terminal uses any eRPLMN, in response to at least one of the broadcast TAIs of the eRPLMN being included in the allowed area, it is determined that the terminal is in the allowed area when the terminal uses the eRPLMN.

For example, in an embodiment of the present disclosure, the predefined rule includes:
in response to using any eRPLMN, in a case that the terminal is in the allowed area when the terminal uses the RPLMN, determining that the terminal is still in the allowed area when the terminal uses any eRPLMN.

Furthermore, in an embodiment of the present disclosure, since the TAI is determined based on the TAC and the PLMN identifier, the terminal may determine, based on the TAI, which PLMN each TAI belongs to.

In summary, in the embodiments of the present disclosure, in response to at least one of the broadcast TAIs of the RPLMN not being included in the non-allowed area, it is determined that the terminal is in the allowed area; in response to using any eRPLMN, whether the terminal is in the allowed area is determined according to the predefined rule. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to perform the service area restriction rule. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 13 is a schematic flow chart of a method for implementing service area restriction provided in an embodiment of the present disclosure. The method is performed by a network device. As shown in FIG. 13 , the method may include the following steps:
step 1301, in response to at least one of the broadcast TAIs of the RPLMN being included in the allowed area, determining that the terminal is in the allowed area; and
step 1302, in response to using any of the at least one eRPLMN, determine whether the terminal is in the allowed area according to a predefined rule.

In an embodiment of the present disclosure, in response to the signaling sent by the terminal, the network device may, for example, perform the service area restriction rule according to the service area restriction information. That is, when the network device receives the signaling sent by the terminal, the network device may, for example, perform the service area restriction rule according to the service area restriction information.

For example, in an embodiment of the present disclosure, the service area information includes, for example, the non-allowed area. That is, the service area information only includes the non-allowed area, but does not include the allowed area. When the network device performs the service area restriction rule, in response to at least one of the broadcast TAIs of the RPLMN not being included in the non-allowed area, the network device may determine that the terminal is in the allowed area; and in response to using any of the at least one eRPLMN, the network device may determine whether the terminal is in the allowed area according to the predefined rule.

For example, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Further, in an embodiment of the present disclosure, in a case that the terminal uses any eRPLMN, in response to the broadcast TAIs of the eRPLMN being all included in the non-allowed area, it is determined that the terminal is in the non-allowed area when the terminal uses the eRPLMN.

Further, in an embodiment of the present disclosure, in a case that the terminal uses any eRPLMN, in response to none of the broadcast TAIs of the eRPLMN being included in the allowed area, it is determined that the terminal is in the non-allowed area when the terminal uses the eRPLMN.

Further, in an embodiment of the present disclosure, in a case that the terminal uses any eRPLMN, in response to at least one of the broadcast TAIs of the eRPLMN being not included in the non-allowed area, it is determined that the terminal is in the allowed area when the terminal uses the eRPLMN.

Further, in an embodiment of the present disclosure, in a case that the terminal uses any eRPLMN, in response to at least one of the broadcast TAIs of the eRPLMN being included in the allowed area, it is determined that the terminal is in the allowed area when the terminal uses the eRPLMN.

For example, in an embodiment of the present disclosure, the predefined rule includes:
in response to using any eRPLMN, in a case that the terminal is in the allowed area when the terminal uses the RPLMN, determining that the terminal is still in the allowed area when the terminal uses any eRPLMN.

Furthermore, in an embodiment of the present disclosure, since the TAI is determined based on the TAC and the PLMN identifier, the terminal may determine, based on the TAI, which PLMN each TAI belongs to.

In summary, in the embodiments of the present disclosure, in response to at least one of the broadcast TAIs of the RPLMN being included in the allowed area, it is determined that the terminal is in the allowed area; in response to using any eRPLMN, whether the terminal is in the allowed area is determined according to the predefined rule. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to perform the service area restriction rule. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 14 is a schematic flow chart of a method for implementing service area restriction provided in an embodiment of the present disclosure. The method is performed by a network device. As shown in FIG. 14 , the method may include the following steps:
step 1401, obtaining current location information of the terminal;
step 1402, determining whether the current location information is included in the service area restriction information.

Furthermore, in an embodiment of the present disclosure, the network device may obtain the current location information of the terminal. The network device may determine whether the current location information is included in the service area restriction information. The network device may obtain the current location information of the terminal from, for example, a base station, or from a positioning network element.

The network device can be, for example, an AMF.

In an embodiment of the present disclosure, the current location information does not specifically refer to fixed location information. For example, when the location of the terminal changes, or a time point at which the network device determines the current location information changes, the current location information may also change accordingly.

In summary, in the embodiments of the present disclosure, the current location information of the terminal is obtained; and it is determined whether the current location information is included in the service area restriction information. In the embodiments of the present disclosure, an implementation mechanism of the service area restriction can be provided, and the service area restriction rule can be performed to improve the accuracy of the service area restriction. The embodiments of the present disclosure specifically disclo se a scheme for the network device to perform the service area restriction rule according to the current location information of the terminal. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

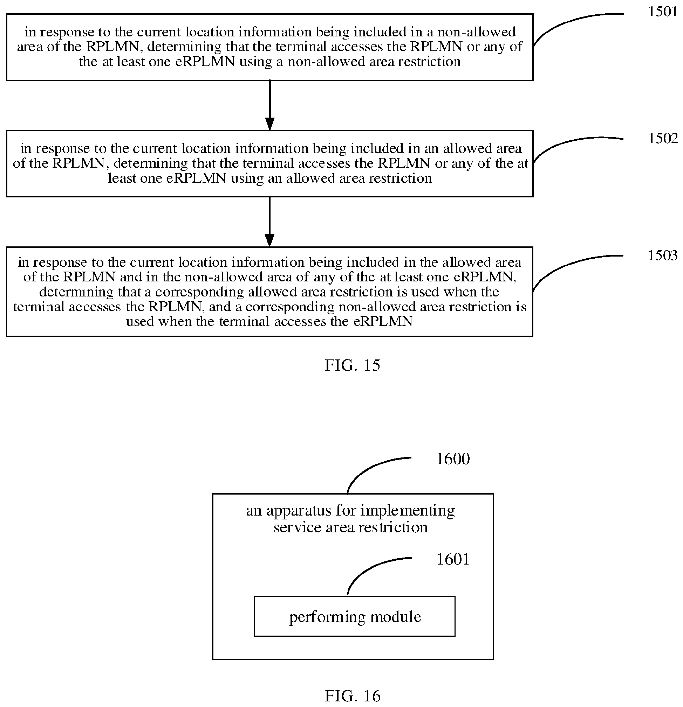

FIG. 15 is a schematic flow chart of a method for implementing service area restriction provided in an embodiment of the present disclosure. The method is performed by a network device. As shown in FIG. 15 , the method may include the following steps:
step 1501, in response to the current location information being included in a non-allowed area of the RPLMN, determining that the terminal accesses the RPLMN or any of the at least one eRPLMN using a non-allowed area restriction;
step 1502, in response to the current location information being included in an allowed area of the RPLMN, determining that the terminal accesses the RPLMN or any of the at least one eRPLMN using an allowed area restriction; or
step 1503, in response to the current location information being included in the allowed area of the RPLMN and in the non-allowed area of any of the at least one eRPLMN, determining that a corresponding allowed area restriction is used when the terminal accesses the RPLMN, and a corresponding non-allowed area restriction is used when the terminal accesses the eRPLMN.

In an embodiment of the present disclosure, when the network device determines whether the current location information is included in the service area restriction information, at least one of steps 1501-1503 may be executed.

In summary, in the embodiments of the present disclosure, in response to the current location information being included in the non-allowed area of the RPLMN, it is determined that the terminal accesses the RPLMN or any of the at least one eRPLMN using the non-allowed area restriction; in response to the current location information being included in the allowed area of the RPLMN, it is determined that the terminal accesses the RPLMN or any of the at least one eRPLMN using the allowed area restriction; or in response to the current location information being included in the allowed area of the RPLMN and in the non-allowed area of any of the at least one eRPLMN, it is determined that the corresponding allowed area restriction is used when the terminal accesses the RPLMN, and the corresponding non-allowed area restriction is used when the terminal accesses the eRPLMN. In the embodiments of the present disclosure, an implementation mechanism of the service area restriction can be provided, and the service area restriction rule can be performed to improve the accuracy of the service area restriction. The embodiments of the present disclosure specifically disclose a scheme for the network device to determine whether the current location information is included in the service area restriction information. The present disclosure provides a processing method for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

FIG. 16 is a structural schematic diagram of an apparatus for implementing service area restriction provided in an embodiment of the present disclosure. As shown in FIG. 16, the apparatus 1600 may be arranged on a terminal, and the apparatus 1600 may include:
a performing module 1601, configured to perform a service area restriction rule in response to receiving service area restriction information sent by a network device;
in which the service area restriction information includes TAIs of an RPLMN and TAIs of at least one eRPLMN.

In summary, in the apparatus for implementing the service area restriction in the embodiments of the present disclosure, the performing module performs the service area restriction rule in response to receiving the service area restriction information sent by the network device; in which the service area restriction information includes the TAIs of the RPLMN and TAIs of at least one eRPLMN. In the embodiments of the present disclosure, an implementation mechanism of the service area restriction can be provided, and the service area restriction rule can be performed to improve the accuracy of the service area restriction. The present disclosure provides a processing apparatus for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control..

Optionally, in an embodiment of the present disclosure, the service area restriction information includes a non-allowed area, and the performing module 1801, when being configured to perform the service area restriction rule, is specifically configured to:
in response to the broadcast TAIs of the RPLMN being all included in the non-allowed area, determine that the terminal is in the non-allowed area; and
determine that the terminal accesses any of the at least one eRPLMN using a non-allowed area restriction.

Optionally, in an embodiment of the present disclosure, the service area restriction information includes an allowed area, and the performing module 1801, when being configured to perform the service area restriction rule, is specifically configured to:
in response to none of the broadcast TAIs of the RPLMN being included in the allowed area, determine that the terminal is in a non-allowed area; and
determine that the terminal accesses any of the at least one eRPLMN using a non-allowed area restriction.

Optionally, in an embodiment of the present disclosure, the performing module 1801, when being configured to determine that when the terminal accesses any of the at least one eRPLMN using the non-allowed area restriction, is specifically configured to:
in a case that the terminal is in the non-allowed area when the terminal uses the RPLMN, determine that the terminal is still in the non-allowed area when the terminal uses any of the at least one eRPLMN.

Optionally, in an embodiment of the present disclosure, the service area restriction information includes a non-allowed area, and the performing module 1801, when being configured to perform the service area restriction rule, is specifically configured to:
in response to at least one of the broadcast TAIs of the RPLMN not being included in the non-allowed area, determining that the terminal is in the allowed area; and
in response to using any of the at least one eRPLMN, determine whether the terminal is in the allowed area according to a predefined rule.

Optionally, in an embodiment of the present disclosure, the service area restriction information includes an allowed area, and the performing module 1801, when being configured to perform the service area restriction rule, is specifically configured to:
in response to at least one of the broadcast TAIs of the RPLMN being included in the allowed area, determine that the terminal is in the allowed area; and
in response to using any of the at least one eRPLMN, determine whether the terminal is in the allowed area according to a predefined rule.

Optionally, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Optionally, in an embodiment of the present disclosure, the predefined rule includes:
in response to using any of the at least one eRPLMN, in a case that the terminal is in the allowed area when the terminal uses the RPLMN, determining that the terminal is still in the allowed area when the terminal uses any of the at least one eRPLMN.

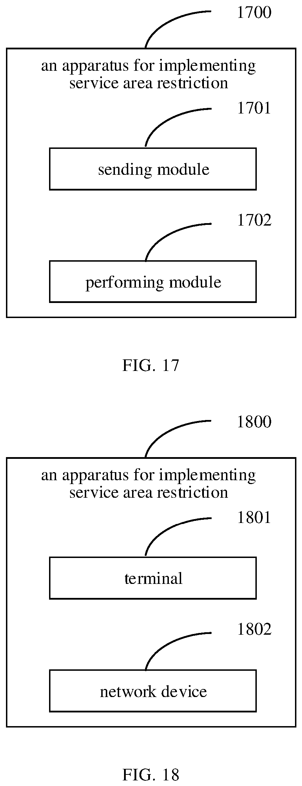

FIG. 17 is a structural schematic diagram of an apparatus for implementing service area restriction provided in an embodiment of the present disclosure. As shown in FIG. 17, the apparatus 1700 may be arranged on a network, and the apparatus 1700 may include:
a sending module 1701, configured to send service area restriction information to a terminal; and
a performing module 1702, configured to perform a service area restriction rule on the terminal according to the service area restriction information, in response to receiving a signaling sent by the terminal;
in which the service area restriction information includes TAIs of an RPLMN and TAIs of at least one eRPLMN.

In summary, in the apparatus for implementing the service area restriction in the embodiments of the present disclosure, the service area restriction information is sent to the terminal through the sending module; the performing module performs the service area restriction rule on the terminal according to the service area restriction information in response to the signaling sent by the terminal; in which the service area restriction information includes the TAIs of the RPLMN and the TAIs of the at least one eRPLMN. In the embodiments of the present disclosure, an implementation mechanism of the service area restriction can be provided, and the service area restriction rule can be performed to improve the accuracy of the service area restriction. The present disclosure provides a processing apparatus for the situation of implementing the service area restriction, to perform the service area restriction rule on the terminal according to the service area restriction information, which can solve the problem of invalid service area restriction caused by the situation that the current location area is included in both the non-allowed area of the RPLMN and the allowed area of the eRPLMN, or other similar situations, and improve the effectiveness of service area control.

Optionally, in an embodiment of the present disclosure, the service area restriction information includes a non-allowed area, and the performing module 1901, when being configured to perform the service area restriction rule on the terminal, is specifically configured to:
in response to the broadcast TAIs of the RPLMN being all included in the non-allowed area, determine that the terminal is in the non-allowed area; and
determine that the terminal accesses any of the at least one eRPLMN using a non-allowed area restriction.

Optionally, in an embodiment of the present disclosure, the service area restriction information includes an allowed area, and the performing module 1901, when being configured to perform the service area restriction rule on the terminal, is specifically configured to:
in response to none of the broadcast TAIs of the RPLMN being included in the allowed area, determine that the terminal is in a non-allowed area; and
determine that the terminal accesses any of the at least one eRPLMN using a non-allowed area restriction.

Optionally, in an embodiment of the present disclosure, the performing module 1901, when being configured to determine that the terminal accesses any of the at least one eRPLMN using the non-allowed area restriction, is specifically configured to:
in a case that the terminal is in the non-allowed area when the terminal uses the RPLMN, determine that the terminal is still in the non-allowed area when the terminal uses any of the at least one eRPLMN.

Optionally, in an embodiment of the present disclosure, the service area restriction information includes a non-allowed area, and the performing module 1901, when being configured to perform the service area restriction rule on the terminal, is specifically configured to:

In response to at least one of the broadcast TAIs of the RPLMN not being included in the non-allowed area, determine that the terminal is in an allowed area; and
in response to using any of the at least one eRPLMN, determine whether the terminal is in the allowed area according to a predefined rule.

Optionally, in an embodiment of the present disclosure, the service area restriction information includes an allowed area, and the performing module 1901, when being configured to perform the service area restriction rule on the terminal, is specifically configured to:
in response to at least one of the broadcast TAIs of the RPLMN being included in the allowed area, determining that the terminal is in the allowed area; and
in response to using any of the at least one eRPLMN, determine whether the terminal is in the allowed area according to a predefined rule.

Optionally, in an embodiment of the present disclosure, the predefined rule includes:
in a case that the terminal uses any of the at least one eRPLMN,
in response to the broadcast TAIs of the eRPLMN being all included in the non-allowed area, or in response to none of the broadcast TAIs of the eRPLMN being included in the allowed area, determining that the terminal is in the non-allowed area when the terminal uses the eRPLMN;
in response to at least one of the broadcast TAIs of the eRPLMN being not included in the non-allowed area, or in response to at least one of the broadcast TAIs of the eRPLMN being included in the allowed area, determining that the terminal is in the allowed area when the terminal uses the eRPLMN.

Optionally, in an embodiment of the present disclosure, the predefined rule includes:
in response to using any of the at least one eRPLMN, in a case that the terminal is in the allowed area when the terminal uses the RPLMN, determining that the terminal is still in the allowed area when the terminal uses any of the at least one eRPLMN.

Optionally, in an embodiment of the present disclosure, the performing module 1901, when being configured to perform the service area restriction rule on the terminal, is specifically configured to:
obtain current location information of the terminal; and
determine whether the current location information is included in the service area restriction information.

Optionally, in an embodiment of the present disclosure, the performing module 1901 is further configured to:
in response to determining whether the current location information is included in the service area restriction information, perform at least one of:
in response to the current location information being included in a non-allowed area of the RPLMN, determining that the terminal accesses the RPLMN or any of the at least one eRPLMN using a non-allowed area restriction;
in response to the current location information being included in an allowed area of the RPLMN, determining that the terminal accesses the RPLMN or any of the at least one eRPLMN using an allowed area restriction; or
in response to the current location information being included in the allowed area of the RPLMN and in the non-allowed area of any of the at least one eRPLMN, determining that a corresponding allowed area restriction is used when the terminal accesses the RPLMN, and a corresponding non-allowed area restriction is used when the terminal accesses the eRPLMN.

FIG. 18 is a schematic diagram of the structure of a system for implementing service area restriction provided by an embodiment of the present disclosure. As shown in FIG. 18 , the system includes:
a terminal, configured to perform any of the methods shown in FIGS. 1 to 7;
a network device, configured to perform any of the methods shown in FIGS. 8 to 15.

In an embodiment of the present disclosure, the network device may be, for example, an AMF.

In an embodiment of the present disclosure, the network device may send the service area restriction information to the terminal. The terminal may receive the service area restriction information, and the terminal may perform the service area restriction rule in response to the service area restriction information sent by the network device. The service area restriction information includes the TAIs of the RPLMN and the TAIs of at least one eRPLMN.

In an embodiment of the present disclosure, the network device may send the service area restriction information to the terminal. The terminal may send the signaling to the network device. The network device may perform the service area restriction rule on the terminal according to the service area restriction information, in response to the signaling sent by the terminal. The service area restriction information includes the TAIs of the RPLMN and the TAIs of at least one eRPLMN.

In summary, the present disclosure provides the processing system for the situation of implementing the service area restriction, to perform the service area restriction rule according to the service area restriction information sent by the network device, which can solve the problem of invalid service area restriction caused by the situation that the current location area is included in both the non-allowed area of the RPLMN and the allowed area of the eRPLMN, or other similar situations, and improve the effectiveness of service area control.

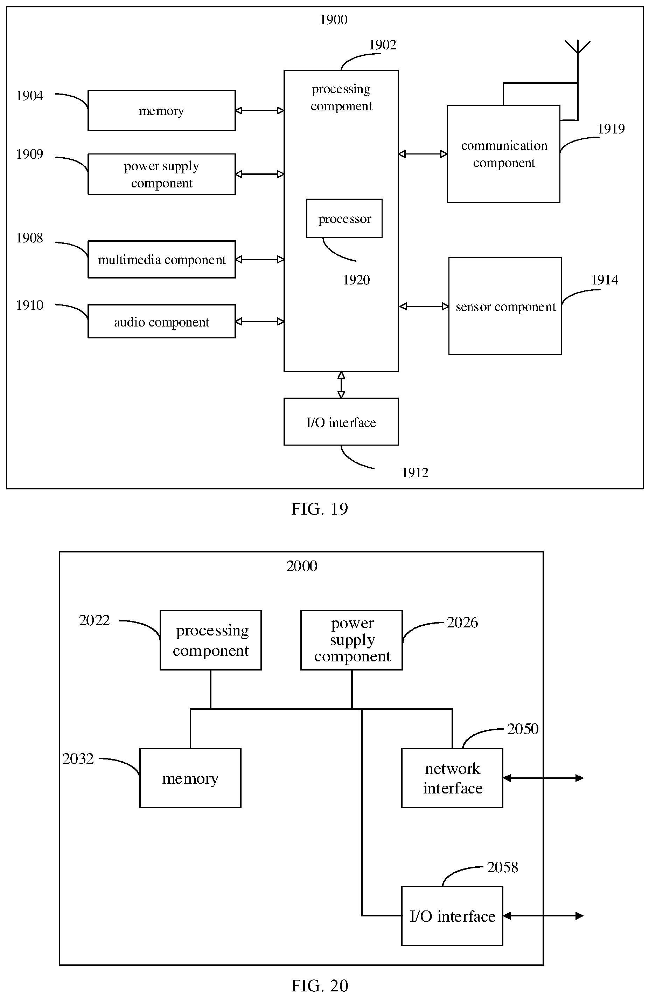

FIG. 19 is a block diagram of a user equipment (UE) 1900 provided by an embodiment of the present disclosure. For example, the UE 1900 may be a mobile phone, a computer, a digital broadcast terminal, a messaging device, a game console, a tablet device, a medical device, a fitness device, a personal digital assistant, etc.

Referring to Fig. 19, the UE 1900 may include one or more of: a processing component 1902, a memory 1904, a power supply component 1906, a multimedia component 1908, an audio component 1910, an input/output (I/O) interface 1912, and a sensor component 1914, and a communication component 1916.

The processing component 1902 generally controls the overall operations of the UE 1900, such as operations associated with display, phone calls, data communications, camera operations, and recording operations. The processing component 1902 may include one or more processors 1919 to execute instructions to complete all or part of the steps of the above method. Additionally, the processing component 1902 may include one or more modules that facilitate interaction between processing component 1902 and other components. For example, the processing component 1902 may include a multimedia module to facilitate interaction between the multimedia component 1908 and the processing component 1902.

The memory 1904 is configured to store various types of data to support operations at the UE 1900. Examples of such data include instructions for any application or method operating on the UE 1900, contact data, phonebook data, messages, pictures, videos, etc. The memory 1904 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1906 provides power to various components of the UE 1900. The power supply component 1906 may include a power management system, one or more power supplies, and other components associated with generating, managing, and distributing power to the UE 1900.

The multimedia component 1908 includes a screen that provides an output interface between the UE 1900 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 1908 includes a front-facing camera and/or a rear-facing camera. When the UE 1900 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 1910 is configured to output and/or input an audio signal. For example, the audio component 1910 includes a microphone (MIC) configured to receive the external audio signal when the UE 1900 is in an operating mode, such as a call mode, a recording mode, and a speech recognition mode. The received audio signal may be further stored in the memory 1904 or sent via the communication component 1916. In some embodiments, the audio component 1910 also includes a speaker for outputting audio signals.

The I/O interface 1912 provides an interface between the processing component 1902 and a peripheral interface module. The peripheral interface module may be a keyboard, a click wheel, a button, etc. These button may include, but is not limited to: a home button, a volume button, a start button, and a lock button.

The sensor component 1914 includes one or more sensors that provide various aspects of status assessment for the UE 1900. For example, the sensor component 1914 may detect the open/closed state of the UE 1900, the relative positioning of components, such as a display and a keypad of the UE 1900, the sensor component 1914 may also detect a position change of the UE 1900 or a component of the UE 1900, presence or absence of user contact with the UE 1900, an orientation or an acceleration/deceleration of the UE 1900, and a temperature change of the UE 1900. The sensor component 1914 may include a proximity sensor configured to detect presence of nearby objects without any physical contact. The sensor component 1914 may also include a light sensor, such as a CMOS or CCD image sensor, for use in imaging applications. In some embodiments, the sensor component 1914 may also include an acceleration sensor, a gyroscope sensor, a magnetic sensor, a pressure sensor, or a temperature sensor.

The communication component 1916 is configured to facilitate wired or wireless communication between the UE 1900 and other devices. The UE 1900 may access a wireless network based on a communication standard, such as WiFi, 2G, or 3G, or their combination. In an exemplary embodiment, the communication component 1916 receives a broadcast signal or broadcast related information from an external broadcast management system via a broadcast channel. In an exemplary embodiment, the communication component 1916 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the UE 1900 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

FIG. 20 is a block diagram of a network device 2000 provided in an embodiment of the present disclosure. For example, the network device 2000 may be provided as a network device. Referring to FIG. 20, the network device 2000 includes a processing component 2022, which further includes at least one processor, and a memory resource represented by a memory 2032 for storing instructions executable by the processing component 2022, such as an application. The application stored in the memory 2032 may include one or more modules, each of which corresponds to a set of instructions. In addition, the processing component 2022 is configured to execute instructions to perform any method of the aforementioned methods performed by the network device.

The network device 2000 may further include a power supply component 2027 configured to perform power management of the network device 2000, a wired or wireless network interface 2050 configured to connect the network device 2000 to a network, and an input/output (I/O) interface 2058. The network device 2000 may operate based on an operating system stored in the memory 2032, such as Windows Server^{™}, Mac OS X^{™}, Unix^{™}, Linux^{™}, FreeBSD^{™} or the like.

In the above embodiments provided by the present disclosure, the methods provided by the embodiments of the present disclosure are introduced from the perspectives of the network device and the UE. In order to implement the functions in the methods provided by the above embodiments of the present disclosure, the network device and the UE may include a hardware structure and a software module, and implement the above functions in the form of a hardware structure, a software module, or a hardware structure plus a software module. One of the above functions may be executed in the form of a hardware structure, a software module, or a hardware structure plus a software module.

In the above embodiments provided by the present disclosure, the methods provided by the embodiments of the present disclosure are introduced from the perspectives of the network device and the UE. In order to implement the functions in the methods provided by the above embodiments of the present disclosure, the network device and the UE may include a hardware structure and a software module, and implement the above functions in the form of a hardware structure, a software module, or a hardware structure plus a software module. One of the above functions may be executed in the form of a hardware structure, a software module, or a hardware structure plus a software module.

An embodiment of the present disclosure provides a communication apparatus. The communication apparatus may include a transceiver module and a processing module. The transceiver module may include a transmitting module and/or a receiving module, the transmitting module is configured to implement a transmitting function, the receiving module is configured to implement a receiving function, and the transceiver module may implement a transmitting function and/or a receiving function.

The communication apparatus may be a terminal (such as the terminal in the aforementioned method embodiments), or an apparatus in the terminal, or an apparatus that can be used in conjunction with the terminal. The communication apparatus may be a network device, or an apparatus in the network device, or an apparatus that can be used in conjunction with the network device.

An embodiment of the present disclosure provides another communication apparatus. The communication apparatus may be a network device, or a terminal (such as the terminal in the aforementioned method embodiments), or a chip, a chip system, or a processor that supports the network device to implement the aforementioned methods, or a chip, a chip system, or a processor that supports the terminal to implement the aforementioned methods. The apparatus may be used to implement the methods described in the aforementioned method embodiments, and the details may refer to the description in the aforementioned method embodiments.

The communication apparatus may include one or more processors. The processor may be a general-purpose processor or a dedicated processor, etc. For example, it may be a baseband processor or a central processing unit. The baseband processor may be used to process the communication protocol and communication data, and the central processing unit may be used to control the communication apparatus (such as a network device, a baseband chip, a terminal, a terminal chip, a DU or a CU, etc.), execute a computer program, and process data of the computer program.

Optionally, the communication apparatus may further include one or more memories, on which a computer program may be stored, and the processor executes the computer program so that the communication apparatus performs the methods described in the above method embodiments. Optionally, data may also be stored in the memory. The communication apparatus and the memory may be provided separately or integrated together.

Optionally, the communication apparatus may further include a transceiver and an antenna. The transceiver may be referred to as a transceiving unit, a transceiving machine, or a transceiving circuit, etc., and is configured to implement a transceiver function. The transceiver may include a receiver and a transmitter, the receiver may be referred to as a receiving machine or a receiving circuit, etc., and is configured to implement a receiving function; the transmitter may be referred to as a transmitting machine or a transmitting circuit, etc., and is configured to implement a transmitting function.

Optionally, the communication apparatus may further include one or more interface circuits. The interface circuit is configured to receive code instructions and transmit them to the processor. The processor runs the code instructions to enable the communication apparatus to execute the methods described in the above method embodiments.

The communication apparatus is a terminal (such as the terminals in the aforementioned method embodiments): the processor is configured to perform the method shown in any of FIGS. 1 to 7.

The communication apparatus is a network device: the processor is configured to perform the method shown in any of FIGS. 8 to 15.

In an implementation, the processor may include a transceiver for implementing receiving and transmitting functions. For example, the transceiver may be a transceiver circuit, or an interface, or an interface circuit. The transceiver circuit, interface, or interface circuit for implementing the receiving and transmitting functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In an implementation, the processor may store a computer program, which runs on the processor and enables the communication apparatus to perform the methods described in the above method embodiments. The computer program may be fixed in the processor, in which case the processor may be implemented by hardware.

In an implementation, the communication apparatus may include a circuit that can implement the functions of transmitting or receiving or communicating in the aforementioned method embodiments. The processor and transceiver described in the present disclosure can be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver can also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal (such as the terminal in the aforementioned method embodiment), but the scope of the communication apparatus described in the present disclosure is not limited thereto, and the structure of the communication apparatus may not be limited thereto. The communication apparatus may be an independent device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, base stations, cloud devices, artificial intelligence devices, and the like; and
(6) others.

In a case that the communication apparatus may be a chip or a chip system, the chip includes a processor and an interface, in which the number of processors may be one or more, and the number of interfaces may be more than one.

Optionally, the chip also includes a memory for storing necessary computer programs and data.

Those skilled in the art may also understand that the various illustrative logical blocks and steps listed in the embodiments of the present disclosure may be implemented by electronic hardware, computer software, or a combination of both. Whether such functions are implemented by hardware or software depends on the specific application and the design requirements of the entire system. Those skilled in the art may use various methods to implement the functions described for each specific application, but such implementation should not be understood as exceeding the scope of protection of the embodiments of the present disclosure.

The present disclosure also provides a readable storage medium having instructions stored thereon, which implement the functions of any of the above method embodiments when executed by a computer.

The present disclosure also provides a computer program product, which implements the functions of any of the above method embodiments when executed by a computer.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the present disclosure may also be described as one or more, and the term "multiple" may be two, three, four or more, which is not limited in the present disclosure. In the embodiments of the present disclosure, for a sort of technical feature, technical features in this sort of technical feature are distinguished by "first", "second", "third", "A", "B", "C" and "D", etc., and there is no order of precedence or size between the technical features described by the "first", "second", "third", "A", "B", "C" and "D".

Those skilled in the art will readily appreciate other embodiments of the present disclosure after considering the specification and practicing the invention disclosed herein. The present disclosure is intended to cover any variations, uses or adaptations of the invention that follow the general principles of the present invention and include common knowledge or customary techniques in the art that are not disclosed in the present disclosure. The description and examples are to be considered exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A method for implementing service area restriction, performed by a terminal, comprising:
performing a service area restriction rule in response to receiving service area restriction information sent by a network device;
wherein the service area restriction information comprises tracking area identities (TAIs) of a registered public land mobile network (RPLMN) and TAIs of at least one equivalent registered public land mobile network (eRPLMN).

2. The method according to claim 1, wherein the service area restriction information comprises a non-allowed area, and performing the service area restriction rule comprises:
in response to the broadcast TAIs of the RPLMN being all comprised in the non-allowed area, determining that the terminal is in the non-allowed area; and
determining that the terminal accesses any of the at least one eRPLMN using a non-allowed area restriction.

3. The method according to claim 1, wherein the service area restriction information comprises an allowed area, and performing the service area restriction rule comprises:
in response to none of the broadcast TAIs of the RPLMN being comprised in the allowed area, determining that the terminal is in a non-allowed area; and
determining that the terminal accesses any of the at least one eRPLMN using a non-allowed area restriction.

4. The method according to claim 2 or 3, wherein determining that the terminal accesses any of the at least one eRPLMN using the non-allowed area restriction comprises:
in a case that the terminal is in the non-allowed area when the terminal uses the RPLMN, determining that the terminal is still in the non-allowed area when the terminal uses any of the at least one eRPLMN.

5. The method according to claim 1, wherein the service area restriction information comprises a non-allowed area, and performing the service area restriction rule comprises:
in response to at least one of the broadcast TAIs of the RPLMN not being comprised in the non-allowed area, determining that the terminal is in an allowed area; and
determining whether the terminal is in the allowed area according to a predefined rule in response to using any of the at least one eRPLMN.

6. The method according to claim 1, wherein the service area restriction information comprises an allowed area, and performing the service area restriction rule comprises:
in response to at least one of the broadcast TAIs of the RPLMN being comprised in the allowed area, determining that the terminal is in the allowed area; and
determining whether the terminal is in the allowed area according to a predefined rule in response to using any of the at least one eRPLMN.

7. The method according to claim 5 or 6, wherein the predefined rule comprises:
in a case that the terminal uses any of the at least one eRPLMN,
in response to the broadcast TAIs of the eRPLMN being all comprised in the non-allowed area, or in response to none of the broadcast TAIs of the eRPLMN being comprised in the allowed area, determining that the terminal is in the non-allowed area when the terminal uses the eRPLMN;
in response to at least one of the broadcast TAIs of the eRPLMN being not comprised in the non-allowed area, or in response to at least one of the broadcast TAIs of the eRPLMN being comprised in the allowed area, determining that the terminal is in the allowed area when the terminal uses the eRPLMN.

8. The method according to claim 5 or 6, wherein the predefined rule comprises:
in response to using any of the at least one eRPLMN, in a case that the terminal is in the allowed area when the terminal uses the RPLMN, determining that the terminal is still in the allowed area when the terminal uses any of the at least one eRPLMN.

9. A method for implementing service area restriction, performed by a network device, comprising:
sending service area restriction information to a terminal; and
performing a service area restriction rule on the terminal according to the service area restriction information, in response to receiving a signaling sent by the terminal,
wherein the service area restriction information comprises tracking area identities (TAIs) of a registered public land mobile network (RPLMN) and TAIs of at least one equivalent registered public land mobile network (eRPLMN).

10. The method according to claim 9, wherein the service area restriction information comprises a non-allowed area, and performing the service area restriction rule on the terminal comprises:
in response to the broadcast TAIs of the RPLMN being all comprised in the non-allowed area, determining that the terminal is in the non-allowed area; and
determining that the terminal accesses any of the at least one eRPLMN using a non-allowed area restriction.

11. The method according to claim 9, wherein the service area restriction information comprises an allowed area, and performing the service area restriction rule on the terminal comprises:
in response to none of the broadcast TAIs of the RPLMN being comprised in the allowed area, determining that the terminal is in a non-allowed area; and
determining that the terminal accesses any of the at least one eRPLMN using a non-allowed area restriction.

12. The method according to claim 10 or 11, wherein determining that the terminal accesses any of the at least one eRPLMN using the non-allowed area restriction comprises:
in a case that the terminal is in the non-allowed area when the terminal uses the RPLMN, determining that the terminal is still in the non-allowed area when the terminal uses any of the at least one eRPLMN.

13. The method according to claim 9, wherein the service area restriction information comprises a non-allowed area, and performing the service area restriction rule on the terminal comprises:
in response to at least one of the broadcast TAIs of the RPLMN not being comprised in the non-allowed area, determining that the terminal is in an allowed area; and
determining whether the terminal is in the allowed area according to a predefined rule in response to using any of the at least one eRPLMN.

14. The method according to claim 9, wherein the service area restriction information comprises an allowed area, and performing the service area restriction rule on the terminal comprises:
in response to at least one of the broadcast TAIs of the RPLMN being comprised in the allowed area, determining that the terminal is in the allowed area; and
determining whether the terminal is in the allowed area according to a predefined rule in response to using any of the at least one eRPLMN.

15. The method according to claim 13 or 14, wherein the predefined rule comprises:
in a case that the terminal uses any of the at least one eRPLMN,
in response to the broadcast TAIs of the eRPLMN being all comprised in the non-allowed area, or in response to none of the broadcast TAIs of the eRPLMN being comprised in the allowed area, determining that the terminal is in the non-allowed area when the terminal uses the eRPLMN;
in response to at least one of the broadcast TAIs of the eRPLMN being not comprised in the non-allowed area, or in response to at least one of the broadcast TAIs of the eRPLMN being comprised in the allowed area, determining that the terminal is in the allowed area when the terminal uses the eRPLMN.

16. The method according to claim 13 or 14, wherein the predefined rule comprises:
in response to using any of the at least one eRPLMN, in a case that the terminal is in the allowed area when the terminal uses the RPLMN, determining that the terminal is still in the allowed area when the terminal uses any of the at least one eRPLMN.

17. The method according to claim 9, wherein performing the service area restriction rule on the terminal comprises:
obtaining current location information of the terminal; and
determining whether the current location information is comprised in the service area restriction information.

18. The method according to claim 17, further comprising:
in response to determining whether the current location information is comprised in the service area restriction information, performing at least one of:
in response to the current location information being comprised in a non-allowed area of the RPLMN, determining that the terminal accesses the RPLMN or any of the at least one eRPLMN using a non-allowed area restriction;
in response to the current location information being comprised in an allowed area of the RPLMN, determining that the terminal accesses the RPLMN or any of the at least one eRPLMN using an allowed area restriction; or
in response to the current location information being comprised in the allowed area of the RPLMN and in the non-allowed area of any of the at least one eRPLMN, determining that a corresponding allowed area restriction is used when the terminal accesses the RPLMN, and a corresponding non-allowed area restriction is used when the terminal accesses the eRPLMN.

19. An apparatus for implementing service area restriction, arranged on a terminal, comprising:
a performing module, configured to perform a service area restriction rule in response to receiving service area restriction information sent by a network device;
wherein the service area restriction information comprises tracking area identities (TAIs) of a registered public land mobile network (RPLMN) and TAIs of at least one equivalent registered public land mobile network (eRPLMN).

20. An apparatus for implementing service area restriction, arranged on a network, comprising:
a sending module, configured to send service area restriction information to a terminal; and
a performing module, configured to perform a service area restriction rule on the terminal according to the service area restriction information, in response to receiving a signaling sent by the terminal;
wherein the service area restriction information comprises tracking area identities (TAIs) of a registered public land mobile network (RPLMN) and TAIs of at least one equivalent registered public land mobile network (eRPLMN).

21. A terminal, comprising a processor and a memory, wherein the memory stores a computer program, and the processor executes the computer program stored in the memory to cause the device to perform the method according to any one of claims 1 to 8.

22. A network device, comprising a processor and a memory, wherein the memory stores a computer program, and the processor executes the computer program stored in the memory to cause the device to perform the method according to any one of claims 9 to 18.

23. A communication apparatus, comprising: a processor and an interface circuit, wherein
the interface circuit is configured to receive code instructions and transmit the code instruction to the processor; and
the processor is configured to execute the code instructions to perform the method according to any one of claims 1 to 8, or the method according to any one of claims 9 to 18.

24. A computer-readable storage medium, wherein the storage medium is configured to store instructions, and when the instructions are executed, the method according to any one of claims 1 to 8 or the method according to any one of claims 9 to 18 is implemented.

25. A system for implementing service area restriction, comprising:
a terminal, configured to perform the method according to any one of claims 1 to 8; and
a network device, configured to perform the method according to any one of claims 9 to 18.
